# EUROPEAN PATENT APPLICATION

(11) **EP 4 681 562 A1**
(43) Date of publication of application: **21.01.2026**
(21) Application number: 23927221.4
(22) Date of filing: 20.12.2023
(51) Int. Cl.: A24F 40/40, A24F 40/10, A24F 40/46

(54) **LIQUID GUIDE SUBSTRATE, HEATING BODY, ATOMIZER AND ELECTRONIC ATOMIZATION DEVICE, AND CERAMIC SUBSTRATE AND PREPARATION METHOD AND APPLICATION THEREFOR**

(30) Priority: 16.03.2023 CN 202310267922; 16.03.2023 CN 202310259239
(71) Applicant: Smoore International Holdings Limited, Grand Cayman, KY1-1111 (KY)
(72) Inventor: JIANG, Yue, Shenzhen, Guangdong 518102 (CN); CUI, Wang, Shenzhen, Guangdong 518102 (CN); CHEN, Zhichao, Shenzhen, Guangdong 518102 (CN); LI, Haihua, Shenzhen, Guangdong 518102 (CN); WU, Mingmei, Shenzhen, Guangdong 518102 (CN); YANG, Boping, Shenzhen, Guangdong 518102 (CN); XIONG, Yuming, Shenzhen, Guangdong 518102 (CN)
(74) Representative: Winter, Brandl - Partnerschaft mbB
(86) International application number: PCT/CN2023/140293
(87) International publication number: WO 2024/187881

(57) **Abstract**

This application relates to the technical field of electronic atomization devices, and in particular, to a liquid guide substrate, a heating component, an atomizer, an electronic atomization device, and a ceramic substrate and a preparation method and application thereof. The liquid guide substrate provided in this application includes: a body, having a first surface and a second surface arranged opposite to each other; and a porous layer, arranged inside the body, where the porous layer includes a plurality of liquid passing through holes and a plurality of bypass holes, the liquid passing through holes extend through the first surface and the second surface along a first direction, the bypass holes are in communication with at least some of the liquid passing through holes along a second direction, and the liquid passing through holes and/or the bypass holes are curved holes. In the liquid guide substrate of this application, the curved liquid passing through holes or/and bypass holes increase a length of a channel, thereby increasing bubble travel resistance to reduce gas return and prevent bubble trapping. In addition, more liquid storage space may reduce total vaporization of nicotine liquid preparations, and sufficient stored liquid may be provided for rapid replenishment.

## Description

This application claims priority to Chinese Patent Application No. 202310267922.8, filed with the China National Intellectual Property Administration on March 16, 2023 and entitled "LIQUID GUIDE SUBSTRATE, HEATING COMPONENT, ATOMIZER, AND ELECTRONIC ATOMIZATION DEVICE", and Chinese Patent Application No. 202310259239.X, filed with the China National Intellectual Property Administration on March 16, 2023 and entitled "CERAMIC SUBSTRATE AND PREPARATION METHOD AND APPLICATION", which are incorporated herein by reference in their entireties.

### TECHNICAL FIELD

This application relates to the technical field of electronic atomization devices, and in particular, to a liquid guide substrate, a heating component, an atomizer, an electronic atomization device, and a ceramic substrate and a preparation method and application thereof.

### BACKGROUND

An electronic atomization device is a new type of electronic product, which is mainly composed of a cigarette device and a nicotine liquid preparation. The nicotine liquid preparation is heated and atomized into an aerosol through an atomization system of the cigarette device and for a consumer to inhale, thereby achieving a puffing experience. An atomization core is an important component in the atomization system of the electronic atomization device. Pass-through holes (the pass-through holes refer to holes with a straight center line) in the same direction are processed in a dense substrate through laser or in another micro-manufacturing manner, and a porosity and a pore size may be adjusted to achieve precise control of an amount of liquid to be supplied and control an atomization amount during heating. In addition, a heating component with the pass-through holes can avoid a situation of a reduction in aroma transmission efficiency as a result of absorption of flavor components caused by submicron holes during atomization.

However, the heating component having the foregoing pass-through hole structure has the following problems:
1. Tobacco soot generated due to an excessively high temperature during atomization may cause hole blockage, resulting in an increase in a local temperature of an atomization surface, and causing dry heating to further occur in a nicotine liquid preparation in the area, thereby aggravating the hole blockage phenomenon and forming a negative feedback mechanism, and finally causing a shortened service life of a heating film and a worse taste.
2. The heating component having the foregoing pass-through hole structure may generate a phenomenon of "gas return", that is, a phenomenon in which a gas generated during atomization pushes the nicotine liquid preparation in the pass-through hole in a reverse direction and pushes the nicotine liquid preparation in the hole back into a liquid storage portion, causing a phenomenon of local insufficient liquid supply.

### SUMMARY

A first aspect of this application is intended to provide a heating component having sufficient liquid supply and not prone to gas return, and a liquid guide substrate thereof, and provide an atomizer using the heating component, and an electronic atomization device.

To achieve the foregoing objective, in the first aspect of this application, the following technical solutions are adopted.

This application provides a liquid guide substrate, including:
a body, having a first surface and a second surface arranged opposite to each other; and
a porous layer, arranged inside the body, where the porous layer includes a plurality of liquid passing through holes and a plurality of bypass holes, the liquid passing through holes extend through the first surface and the second surface along a first direction, the bypass holes are in communication with at least some of the liquid passing through holes along a second direction, and the liquid passing through holes and/or the bypass holes are curved holes.

Optionally, each of the bypass holes is a curved hole, and the bypass hole is bent at an intersection with each of the liquid passing through holes, so as to bypass the liquid passing through hole.

Optionally, each of the bypass holes is in communication with each liquid passing through hole among the plurality of liquid passing through holes.

Optionally, each of the liquid passing through holes is a curved hole, and the liquid passing through hole is bent at an intersection with each of the bypass holes, so as to bypass the bypass hole.

Optionally, each of the bypass holes is provided perpendicular to each of the liquid passing through holes.

Optionally, the first direction is arranged perpendicular to the second direction.

Optionally, a plurality of porous layers are provided, the plurality of porous layers are provided at intervals along a third direction, and the third direction is arranged at an angle to a plane formed by the first direction and the second direction.

Optionally, the third direction is perpendicular to the plane formed by the first direction and the second direction.

Optionally, the first surface is an atomization surface, and the second surface is a liquid absorbing surface.

Optionally, an interval between two adjacent porous layers is in a range of 20-400 micrometers.

Optionally, an interval between two adjacent porous layers is in a range of 40-100 micrometers.

Optionally, pore sizes of the liquid passing through holes and the bypass holes are the same or different, and the pore sizes are in a range of 10-200 micrometers.

Optionally, a pore size of each of the liquid passing through holes is in a range of 10-80 micrometers.

Optionally, a pore size of each of the bypass holes is in a range of 10-150 micrometers.

Optionally, a hole spacing between two adjacent liquid passing through holes in the porous layer is in a range of 20-300 micrometers.

Optionally, a hole spacing between two adjacent liquid passing through holes in the porous layer is in a range of 20-150 micrometers.

Optionally, a hole spacing between two adjacent bypass holes in the porous layer is in a range of 20-300 micrometers.

Optionally, a hole spacing between two adjacent bypass holes in the porous layer is in a range of 20-150 micrometers.

Optionally, a porosity of the liquid guide substrate is in a range of 10-90%.

Optionally, a porosity of the liquid guide substrate is in a range of 20-80%.

Optionally, the body is made of a ceramic material.

Optionally, a main raw material for preparing the liquid guide substrate includes silicon oxide. Further, the raw material for preparation includes silicon oxide, potassium feldspar, acrylamide, N,N'-Methylenebisacrylamide, ammonium persulfate, and tetramethylethylenediamine.

This application provides a heating component. The heating component includes the foregoing liquid guide substrate and a heating element, the heating element is embedded in the body or arranged on a first surface of the body, and the first surface is an atomization surface.

Optionally, the heating element may be a heating film.

Optionally, the dimensions of the heating component are 7-9 mm in length, 3-5 mm in width, and 1-2 mm in thickness.

This application provides an atomizer, including:
a liquid storage portion, storing a liquid; and
the foregoing heating component, where the first surface of the body is an atomization surface, the second surface of the body is a liquid absorbing surface, and the liquid absorbing surface is in communication with the liquid storage portion.

This application provides an electronic atomization device, including the foregoing atomizer.

According to a second aspect of this application, a method for preparing a ceramic substrate is provided, including the following steps:
1) stacking ablative organic-material meshes to form a three-dimensional organic template; and
2) filling the three-dimensional organic template with ceramic slurry, and performing drying, degreasing, and sinter molding to obtain the ceramic substrate.

Optionally, a three-dimensional hole is formed in the ceramic substrate after the three-dimensional organic template is ablated.

Optionally, a material of the organic-material mesh is an organic polymer material; and the organic polymer material includes one of a polyamide material and a polyester material.

Optionally, the material of the organic-material mesh is selected from at least one of nylon and polyethylene terephthalate.

Optionally, the organic-material mesh in step 1) is formed by alternately weaving warp yarns and weft yarns of organic-material silk yarns.

Optionally, a weaving method may be plain weave, and the organic-material silk yarns may be woven by alternating 1 warp and 1 weft. Optionally, the diameters of the warp yarns and the weft yarns are the same or different, and the diameters are in a range of 10-200 micrometers.

Optionally, the diameter of the warp yarn is in a range of 10-80 micrometers.

Optionally, the diameter of the weft yarn is in a range of 10-150 micrometers.

Optionally, a spacing between adjacent warp yarns is in a range of 20-300 micrometers, and a spacing between adjacent weft yarns is in a range of 20-300 micrometers.

Optionally, a spacing between adjacent warp yarns is in a range of 20-150 micrometers, and a spacing between adjacent weft yarns is in a range of 20-150 micrometers.

Optionally, the organic-material mesh further includes a step of performing fixation through an outer frame.

Optionally, the outer frame is a metal outer frame.

Optionally, a quantity of layers of the stacked organic-material meshes in step 1) in a range of 50-500, and a thickness of the stacked meshes is in a range of 2-10 mm. Optionally, a specific spacing may be defined between adjacent layers. For example, the spacing between layers may be in a range of 10-100 micrometers.

Optionally, after the stacking the organic-material meshes in step 1), the method further includes a step of fixing the stacked meshes through a clamp.

Optionally, the method for preparing the ceramic slurry in step 2) includes the following steps: mixing ceramic powder, an organic monomer, a cross-linking agent, and water, adjusting pH, and performing trituration to obtain the ceramic slurry.

Optionally, a mass ratio of the ceramic powder, the organic monomer, the cross-linking agent, and the water is (60-80):(2-5):(0.2-2):(15-40); and/or
the organic monomer is acrylamide, and the cross-linking agent is N,N'-Methylenebisacrylamide.

Optionally, the method for preparing the ceramic slurry further includes a step of adding an initiator and a catalyst to the ceramic slurry.

Optionally, a mass ratio of the organic monomer, the initiator, and the catalyst is (1-10):(0.1-1):(0.1-1);
the initiator is ammonium persulfate; and
the catalyst is tetramethylethylenediamine.

Optionally, the ceramic powder includes silicon dioxide and a sintering aid; and
a mass ratio of the silicon oxide to the sintering aid is (55-95):(5-30).

Optionally, the sintering aid is potassium feldspar.

Optionally, a rotational speed for the trituration is in a range of 50-100 rpm, and a time for the trituration is in a range of 24-36h; and/or
a value for adjusting the pH during preparation of the ceramic slurry is in a range of 8-10; and/or
a regulator for adjusting the pH is ammonium hydroxide or tetramethylammonium hydroxide.

Optionally, the grinding may be ball milling.

Optionally, the mass concentration of ammonia in the ammonium hydroxide is in a range of 5-39%.

Optionally, in step (2), a temperature for the drying is in a range of 25-60°C, and a time for the drying is in a range of 24-120h; and/or

in step (2), a temperature for the degreasing is in a range of 450-500°C, and a time for the degreasing is in a range of 1800-2400 min; and/or

in step (2), a temperature for the sintering is in a range of 1150-1200°C, and a time for the sintering is in a range of 1200-1800 min.

Optionally, the ambient humidity in the step of drying is in a range of 30-80%. The ambient humidity refers to the relative humidity of the environment, and the ambient humidity is maintained in a range of 30-80%, which helps prevent cracks from being formed on the ceramic substrate during the drying.

This application provides a ceramic substrate, which is obtained through the foregoing preparing method.

This application provides a heating component, including the foregoing ceramic substrate and a heating film arranged on a surface of the ceramics substrate.

This application provides a method for manufacturing the foregoing heating component, including the following steps:
printing and sintering a heating film on a surface of the foregoing ceramic substrate, to obtain the heating component.

Optionally, a temperature for the sintering is in a range of 1150-1200°C, and a time for the sintering is in a range of 1200-1800 min.

This application further provides an atomization device, including the foregoing ceramic substrate and/or the foregoing heating component.

Optionally, the atomization device is an electronic atomization device.

This application has the following beneficial effects.
1. Through the technical solution of this application, the bypass holes of the liquid guide substrate in this application are in communication with at least some of the liquid passing through holes along the second direction. During atomization, in a process in which bubbles generated on the atomization surface are pushed into the liquid storage portion along a direction opposite to a direction of the liquid passing through holes due to thrust generated by gas expansion, the bypass holes decompose the bubbles into smaller bubbles layer by layer, and eliminate the bubbles in a multi-layer interconnected through hole, so that no large bubbles are generated to block the liquid passing through hole and cause a phenomenon of local insufficient liquid supply. The curved liquid passing through holes or/and bypass holes increase a length of a channel. The increased length of the channel and a curved path thereof increase bubble travel resistance of the bubbles in the channel, making it difficult for the bubbles to enter the liquid absorbing surface. During inhalation, a bubble closer to the atomization surface is sucked out, thereby helping reduce gas return. The curved liquid passing through holes or/and bypass holes have more liquid storage space, and may prevent total vaporization of nicotine liquid preparations. When one liquid passing through hole is blocked by cigarette soot, a situation where no liquid is in the channel does not occur in a short time. In addition, sufficient liquid stored in the bypass hole may be replenished more rapidly, thereby more effectively avoiding the problem of local dry heating and prolonging the service life of the heating film. In addition, the liquid guide substrate of this application may be obtained through a simple process.
2. The heating component provided in this application may improve transmission efficiency of flavor in the nicotine liquid preparation, thereby improving taste of smoke inhalation.
3. This application provides a method for preparing a ceramic substrate, including the following steps: 1) stacking ablative organic-material meshes to form a three-dimensional organic template; and 2) filling the three-dimensional organic template with ceramic slurry, and performing drying, degreasing, and sinter molding to obtain the ceramic substrate. In this application, the three-dimensional organic template is constructed, the ceramic slurry is poured, and degreasing and sintering are performed to form a dense ceramic having an interconnected through-hole structure. The ceramic substrate has a longitudinal through-hole structure extending through upper and lower surfaces (the liquid absorbing surface and the atomization surface) of the ceramic substrate along a vertical direction and a transverse curved through-hole structure connected to the longitudinal through hole. During atomization, in a process in which bubbles generated on the atomization surface are pushed into a liquid storage tank along a direction opposite to a direction of the longitudinal through-hole structure due to thrust generated by gas expansion, the transverse curved through hole decomposes the bubbles into smaller bubbles layer by layer, and eliminate the bubbles in the multi-layer interconnected through hole, so that no large bubbles are generated to block the longitudinal through-hole structure and cause a phenomenon of local insufficient liquid supply. In addition, the curved through-hole structure may increase a length of a channel, and then increase bubble travel resistance of the bubbles in the channel, making it difficult for the bubbles to enter the liquid absorbing surface. During inhalation, a bubble closer to the atomization surface is sucked out, thereby helping reduce gas return. The curved through-hole structure increases the liquid storage space, and may prevent total vaporization of nicotine liquid preparations. When a longitudinal through-hole structure is blocked by cigarette soot, a situation where no liquid is in the channel does not occur in a short time. In addition, sufficient liquid storage in the transverse curved through hole may provide faster replenishment, thereby more effectively avoiding the problem of local dry heating, prolonging the service life of the heating film, and improving taste. In addition, through the method, a through-hole structure that meets a requirement may be rapidly formed in the substrate, which is a simple process with high efficiency in forming holes, thereby avoiding defects of low efficiency of laser drilling and unsuitability for large-scale production.

### BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.
FIG. 1 is a schematic structural diagram of an electronic atomization device according to Embodiment 1 of a first aspect of this application.
FIG. 2 is a schematic structural diagram of an atomizer of the electronic atomization device provided in FIG. 1.
FIG. 3 is a schematic structural diagram of a heating component of an atomizer provided in FIG. 2.
FIG. 4 is a cross-sectional view of a liquid guide substrate in the heating component provided in FIG. 3.
FIG. 5 is a longitudinal cross-sectional view of a liquid guide substrate in the heating component provided in FIG. 3.
In FIG. 6, a is a partial enlarged 3D rendering of a cross section of the liquid guide substrate in the heating component provided in FIG. 3, and b is a partial enlarged 3D rendering of a longitudinal section of the liquid guide substrate in the heating component provided in FIG. 3.
FIG. 7 is a schematic diagram of a porous layer in the liquid guide substrate of the heating component provided in FIG. 3.
FIG. 8 is a 3D schematic diagram of a plurality of porous layers in the liquid guide substrate in the heating component provided in FIG. 3 that are arranged at intervals along a third direction.
FIG. 9 is a schematic plane view of a plurality of porous layers in the liquid guide substrate of the heating component provided in FIG. 3 that are arranged at intervals along a third direction.
FIG. 10 is an optical micrograph of an organic template for manufacturing a liquid guide substrate of this application.
FIG. 11 is a micrograph of an SEM for manufacturing an organic template of a liquid guide substrate of this application.
FIG. 12 is a CT scan perspective view of a liquid guide substrate according to this application, where figure a at an upper left corner is a CT perspective diagram of an atomization surface, figure b at an upper right corner is a side CT perspective view of a plane formed along a first direction and a third direction, figure c at a lower left corner is a side CT perspective view of a plane formed along the first direction and a second direction, and figure d at a lower right corner is an overall three-dimensional CT perspective view.
FIG. 13 is a micrograph of a cross section of a liquid guide substrate in this application.
FIG. 14 is a micrograph of a cross section of a liquid guide substrate in this application.
FIG. 15 is a micrograph of a side of a plane formed by a liquid guide substrate of this application along a first direction and a second direction. FIG. 16 is a model diagram of bubble trapping in a pass-through hole during atomization in the related art.
FIG. 17 is a model diagram of no bubble trapping in interconnected through holes of this application during atomization.
FIG. 18 is a schematic diagram of a mesh woven from silk yarns in Embodiment 1 of a second aspect of this application.

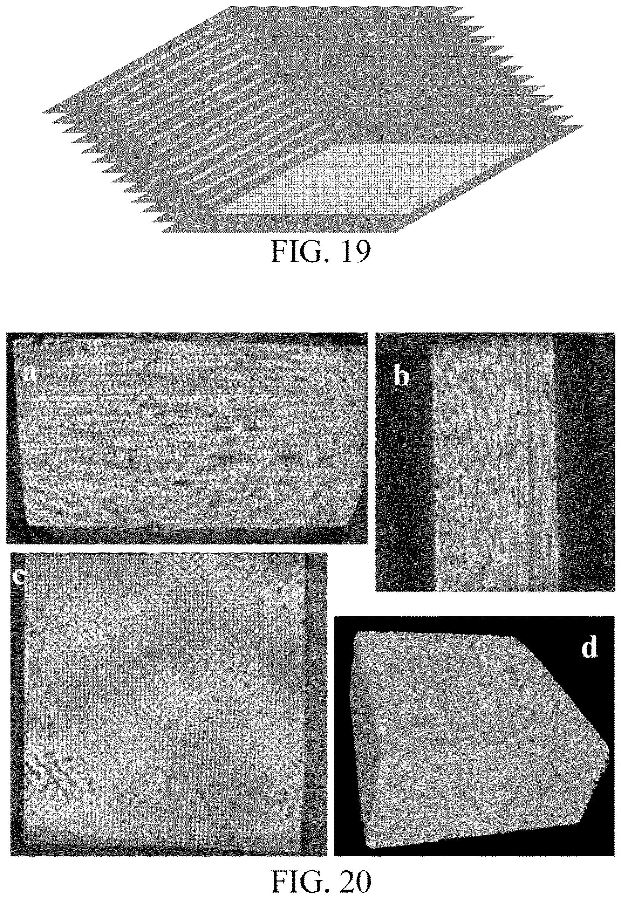

FIG. 19 is a schematic diagram of a three-dimensional organic template constructed in Embodiment 1 of a second aspect of this application.
FIG. 20 is a CT scan perspective view of a ceramic substrate in Embodiment 1 of a second aspect of this application, where a is a CT scan perspective view of an atomization surface (a surface having a heating film), b and c are two CT scan perspective views of side surfaces of the ceramic substrate, and d is a three-dimensional CT scan perspective view of a ceramic substrate.

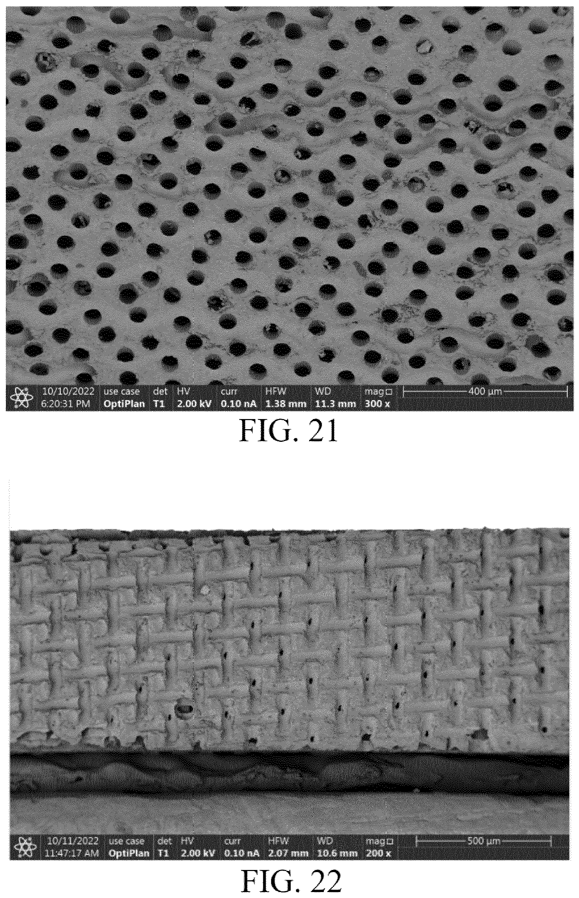

FIG. 21 is a micrograph of a cross section of a ceramic substrate in Embodiment 1 of a second aspect of this application.
FIG. 22 is a micrograph of a longitudinal section of a ceramic substrate in Embodiment 1 of a second aspect of this application.

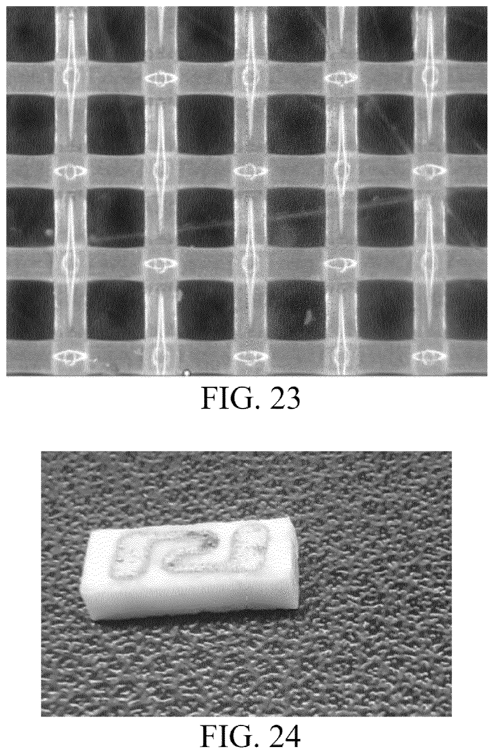

FIG. 23 is an optical micrograph of an organic template in Embodiment 1 of a second aspect of this application.
FIG. 24 is a finished product of a heating component in Embodiment 4 of a second aspect of this application.

Descriptions of reference numerals:
110. Body; 111. First surface; 112. Second surface; 113. porous layer; 114. Liquid passing through hole; 115. Bypass hole; 1. Liquid storage portion; 2. Atomization cavity; 3. Atomization base; 4. Heating component; 5. Air inlet channel; 6. Air outlet channel; 7: Housing; 8. Atomizer; 9. Main unit; 10: Housing; 200. Heating element.

### DETAILED DESCRIPTION

Technical solutions of this application are clearly and completely described below with reference to the accompanying drawings. Apparently, described embodiments are some rather than all embodiments of this application. All other embodiments obtained by a person of ordinary skill in the art based on the embodiments of this application without creative efforts shall fall within the protection scope of this application.

In the description of this application, it should be noted that orientation or position relationships indicated by terms such as "center", "up", "down", "left", "right", "vertical", "horizontal", "inside", and "outside" are based on orientation or position relationships shown in the accompanying drawings, and are merely used for ease and brevity of description of this application, rather than indicating or implying that the mentioned device or element needs to have a specific orientation or be constructed and operated in a specific orientation. Therefore, such terms should not be construed as a limitation on this application. In addition, terms "first", "second", and "third" are only used to describe the objective and cannot be construed as indicating or implying relative importance.

In the description of this application, it should be noted that unless otherwise explicitly specified or defined, terms "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. For a person of ordinary skill in the art, specific meanings of the foregoing terms in this application may be understood based on specific circumstances.

If no specific experimental steps or conditions are specified in the embodiments, the experiments can be carried out according to the conventional experimental steps or conditions described in the literature in the art. The reagents or instruments used without indicating the manufacturer are all conventional reagent products that can be purchased commercially.

In addition, the technical features involved in different implementations of this application described below may be combined with each other so long as they do not constitute a conflict with each other.

### Embodiment 1 in a first aspect

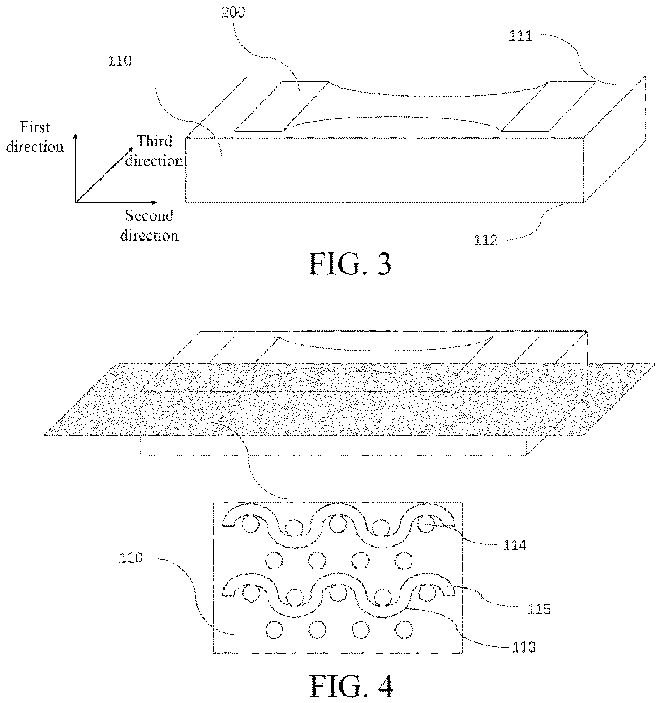

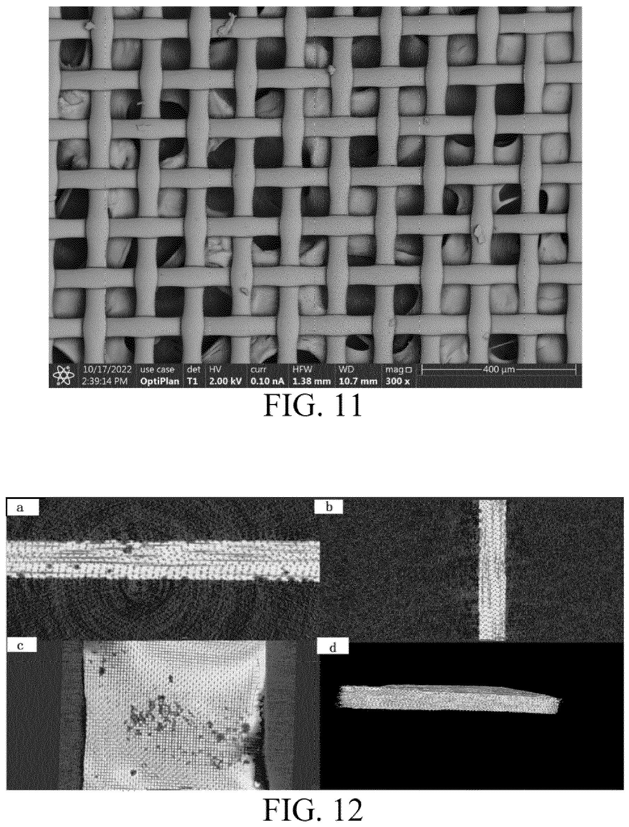

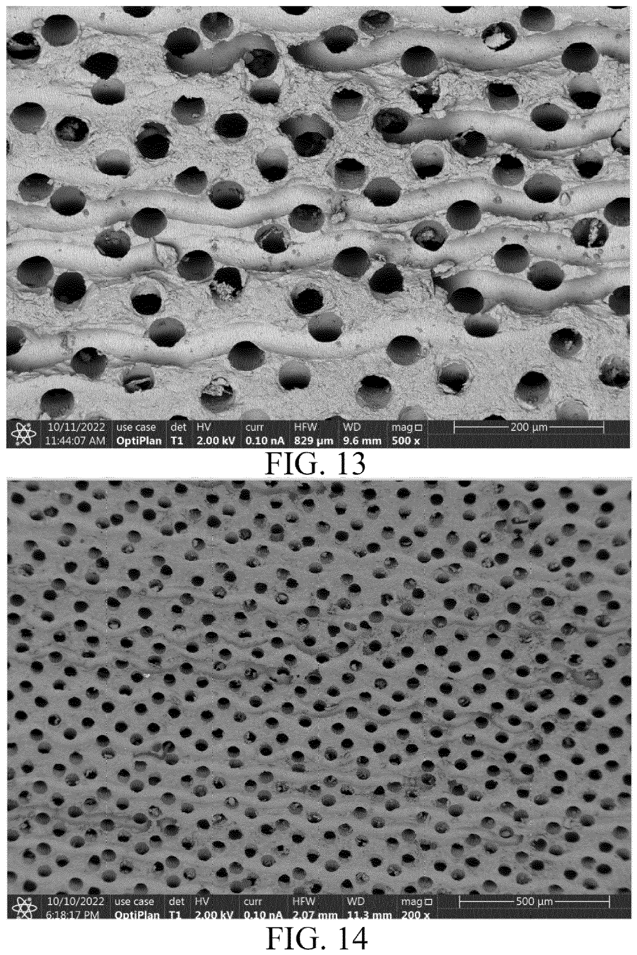

As shown in FIG. 3 to FIG. 15, Embodiment 1 of a liquid guide substrate provided in the first aspect of this application includes a body 110 and a porous layer 113. The body 110 has a first surface 111 and a second surface 112 arranged opposite to each other. The porous layer 113 is arranged in the body 110. The porous layer 113 includes a plurality of liquid passing through holes 114 and a plurality of bypass holes 115. The liquid passing through holes 114 extend through the first surface 111 and the second surface 112 of the body 110 along a first direction. The bypass holes 115 are in communication with at least some of the liquid passing through holes 114 along a second direction. The liquid passing through holes 114 and the bypass holes 115 are all curved holes.

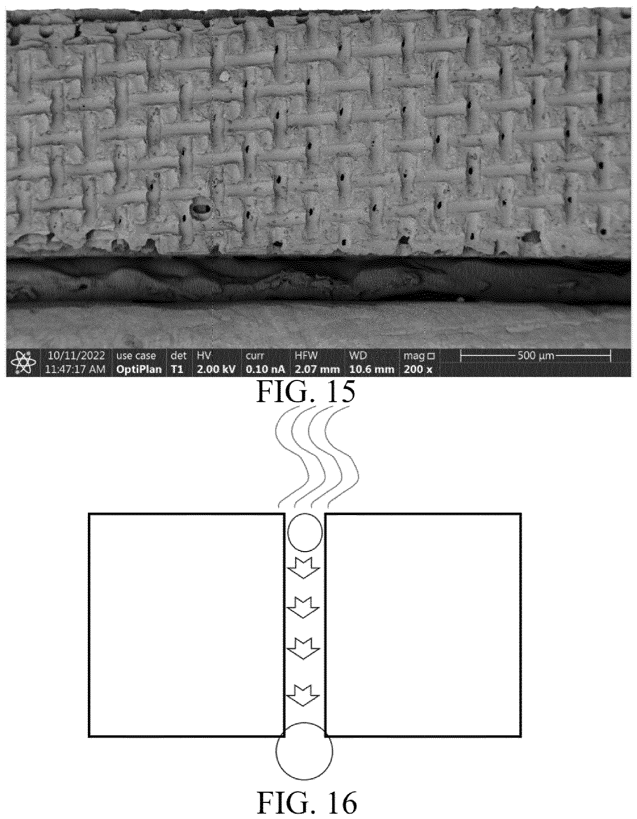

In the related art, a one-dimensional pass-through hole structure may generate a phenomenon of "gas return". When a heating component having a pass-through hole performs atomization, bubbles are generated on a surface of an atomization surface. Due to thrust generated by gas expansion during the atomization, the bubbles are pushed into a liquid storage portion in a direction opposite to a direction of the pass-through hole. However, due to a pressure generated by a nicotine liquid preparation in the liquid storage portion and surface tension of liquid, the bubbles entering the liquid storage portion cannot detach properly and tend to get stuck at the root of the pass-through hole to form trapped bubbles, which block delivery of the nicotine liquid preparation, causing a phenomenon of local insufficient liquid supply (as shown in FIG. 16).

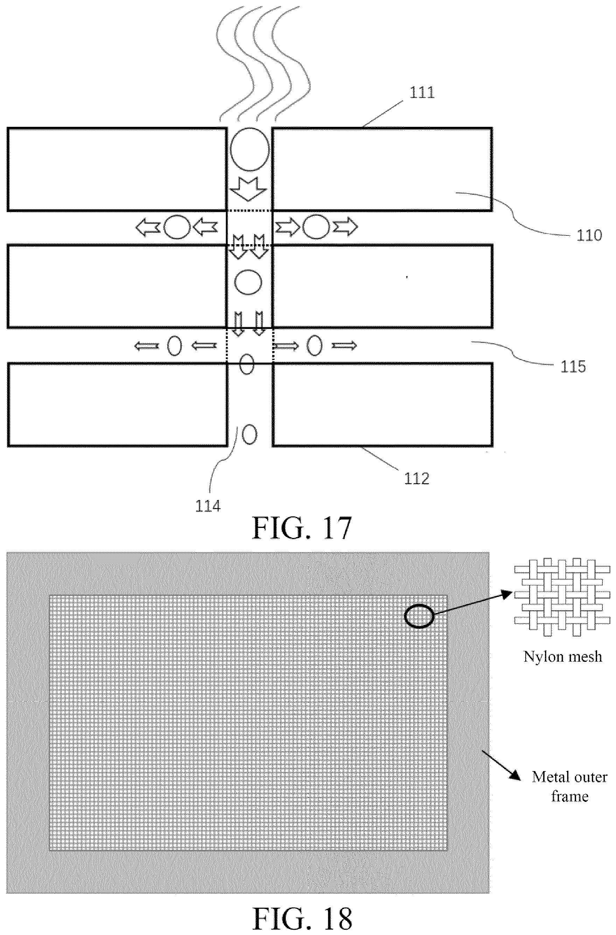

Through the technical solutions of this embodiment, during atomization on the liquid guide substrate, the bypass holes 115 are in communication with at least some of the liquid passing through holes 114 along the second direction. In a process in which bubbles generated on the atomization surface are pushed into the liquid storage portion 1 along a direction opposite to a direction of the liquid passing through holes 114 due to thrust generated by gas expansion, the curved bypass holes 115 decompose the bubbles into smaller bubbles layer by layer, and eliminate the bubbles in a multi-layer interconnected through hole, so that no large bubbles are generated to block the liquid passing through holes 114 and cause a phenomenon of local insufficient liquid supply (as shown in FIG. 17). The curved liquid passing through holes 114 and curved bypass holes 115 increase a length of a channel. The increased length of the channel and a curved path thereof increase bubble travel resistance of the bubbles in the channel, making it difficult for the bubbles to enter the liquid absorbing surface. During inhalation, a bubble closer to the atomization surface is sucked out, thereby helping reduce gas return. The curved liquid passing through holes 114 and curved bypass holes 115 have more liquid storage space, and may prevent total vaporization of nicotine liquid preparations. When one liquid passing through hole 114 is blocked by cigarette soot, a situation where no liquid is in the channel does not occur in a short time. In addition, sufficient liquid stored in the bypass hole 115 may be replenished more rapidly, thereby more effectively avoiding the problem of local dry heating and prolonging the service life of the heating film.

It should be noted that the body 110 in this embodiment is formed by ceramic sintering and has a substantially cubic structure. The first surface 111 and the second surface 112 are two opposite surfaces. Two ends of each of the liquid passing through holes 114 extend through the first surface 111 and the second surface 112. A liquid enters the liquid passing through hole 114 from the second surface 112. The liquid flows from the liquid passing through hole 114 to the first surface 111, and is heated and atomized on the first surface 111.

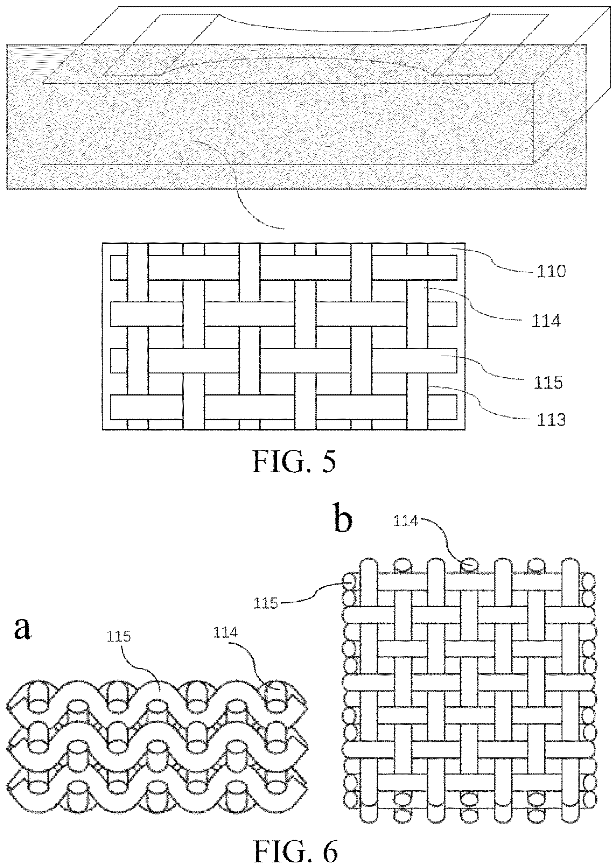

As shown in FIG. 4 and FIG. 5, each of the bypass holes 115 extend along the second direction, that is, the bypass hole 115 is provided at an angle to the liquid passing through hole 114. The bypass hole 115 provides a channel for a liquid or a bubble to flows toward a side portion.

As shown in FIG. 6, in the technical solution of this embodiment, the liquid passing through holes 114 are curved holes, and the bypass holes 115 are curved holes. The curved liquid passing through holes 114 and curved bypass holes 115 increase a length of a channel. The increased length of the channel and a curved path thereof increase bubble travel resistance of the bubbles in the channel, making it difficult for the bubbles to enter the liquid absorbing surface, thereby helping reduce gas return. The curved liquid passing through holes 114 and curved bypass holes 115 have more liquid storage space, and may prevent total vaporization of nicotine liquid preparations. When one liquid passing through hole 114 is blocked by cigarette soot, a situation where no liquid is in the channel does not occur in a short time. In addition, sufficient liquid storage in the bypass holes 115 may provide faster replenishment.

As shown in FIG. 4 and FIG. 17, in the technical solutions of the embodiments, each of the bypass holes 115 is in communication with each liquid passing through hole 114 among the plurality of liquid passing through holes 114, so that a bubble in each liquid passing through hole 114 can flow laterally to the bypass hole 115, thereby further eliminating the phenomenon of gas return.

Certainly, in some implementations not shown, the bypass holes 115 may also be in communication with some of the liquid passing through holes 114 along the second direction.

As shown in FIG. 5, FIG. 6, FIG. 7, and FIG. 8, the bypass hole 115 is bent at an intersection with the liquid passing through hole 114, so as to bypass the liquid passing through hole 114. The liquid passing through hole 114 is bent at an intersection with the bypass hole 115, so as to bypass the bypass hole 115. In this way, the bypass holes 115 and the liquid passing through holes 114 intersect in a warp-and-weft alternating weaving pattern, that is, at adjacent intersection nodes, coverage directions of the liquid passing through holes 114 and the bypass holes 115 are opposite. As shown in FIG. 17, at an intersection node in the figure, a solid line represents that the coverage direction is above, and a dashed line represents that the coverage direction is below.

Certainly, in some implementations not shown, the bypass hole 115 may also be bent at another position. For example, a part of the bypass hole 115 located between two adjacent liquid passing through holes 114 is bent, as long as a length of the bypass hole 115 can be increased.

Certainly, in some implementations not shown, the liquid passing through hole 114 may also be bent at another position. For example, a part of the liquid passing through hole 114 located between two adjacent bypass holes 115 is bent, as long as a length of the liquid passing through hole 114 can be increased.

Optionally, the first direction in this embodiment is arranged perpendicular to the second direction, and the bypass hole 115 is provided perpendicular to the liquid passing through hole 114.

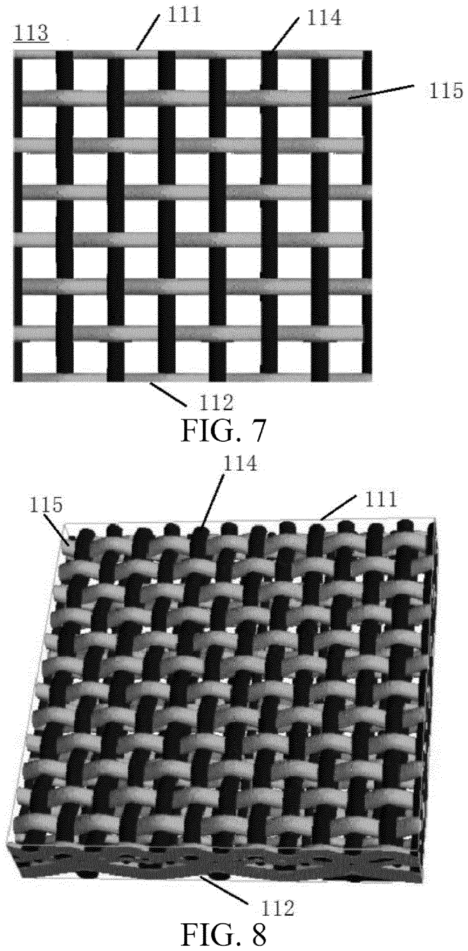

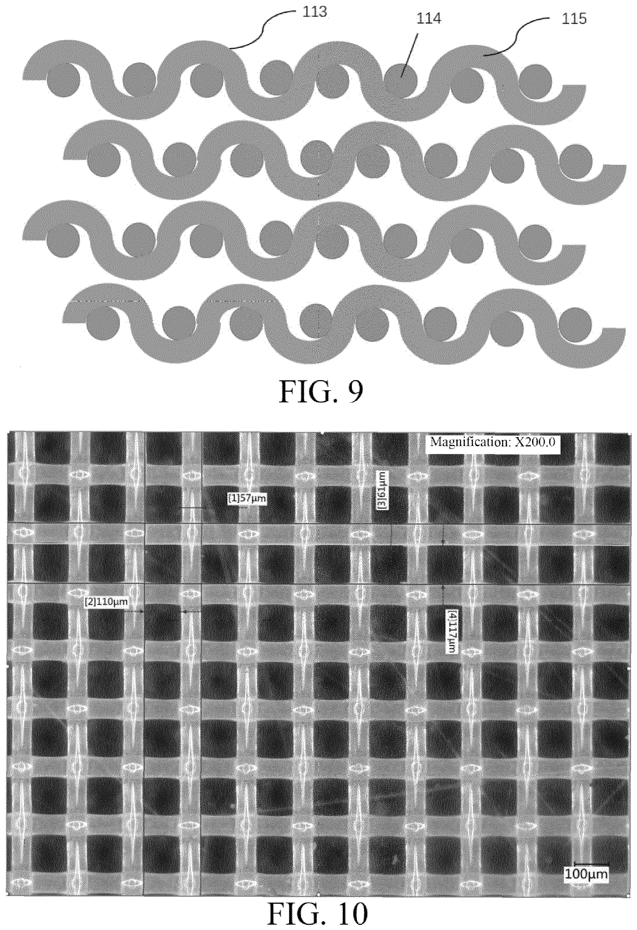

As shown in FIG. 8 and FIG. 9, in the liquid guide substrate of this embodiment, a plurality of porous layers 113 are provided, and the plurality of porous layers 113 are provided at intervals along a third direction. The third direction is arranged at an angle to a plane formed by the first direction and the second direction.

Optionally, the third direction is arranged perpendicular to the plane formed by the first direction and the second direction.

Certainly, in some implementations not shown, the third direction may be arranged at another angle (for example, 30°, 50°, 80°, or 120°) to the plane formed by the first direction and the second direction.

As shown in FIG. 3, the first surface 111 is an atomization surface, and the second surface 112 is a liquid absorbing surface.

As shown in FIG. 9, an interval is defined between two adjacent porous layers 113. Certainly, in some implementations not shown, the interval between two adjacent porous layers 113 is in a range of 20-400 micrometers, for example, may optionally be 20 micrometers, 30 micrometers, 40 micrometers, 50 micrometers, 60 micrometers, 70 micrometers, 90 micrometers, 110 micrometers, 150 micrometers, 170 micrometers, 200 micrometers, 230 micrometers, 250 micrometers, 290 micrometers, 300 micrometers, 350 micrometers, or 400 micrometers. Optionally, the interval between two adjacent porous layers 113 is in a range of 40-100 micrometers.

Optionally, a pore size of the liquid passing through hole 114 is 30 micrometers, and a hole spacing between adjacent liquid passing through holes 114 is 50 micrometers. a pore size of the bypass hole 115 is 30 micrometers, a hole spacing between adjacent bypass holes 115 is 50 micrometers, and a porosity of the liquid guide substrate is about 40%. The liquid guide substrate with the specification parameter can enable various tobacco-flavored nicotine liquid preparations to have a better taste when used in an atomization device.

Certainly, in some implementations not shown, the pore sizes of the liquid passing through hole 114 and the bypass hole 115 may be the same or different, as long as the pore sizes are in a range of 10-200 micrometers. For example, optionally, the pore sizes are in a range of 10 micrometers, 20 micrometers, 30 micrometers, 40 micrometers, 50 micrometers, 60 micrometers, 70 micrometers, 80 micrometers, 90 micrometers, 100 micrometers, 110 micrometers, 120 micrometers, 130 micrometers, 140 micrometers, 150 micrometers, 160 micrometers, 170 micrometers, 180 micrometers, 190 micrometers, and 200 micrometers. Optionally, the pore size of the liquid passing through hole 114 is in a range of 10-80 micrometers. For example, optionally, the pore size of the liquid passing through hole 114 is 10 micrometers, 20 micrometers, 30 micrometers, 40 micrometers, 50 micrometers, 60 micrometers, 70 micrometers, or 80 micrometers. When the pore size of the liquid passing through hole 114 is less than 10 micrometers, a problem of inadequate liquid supply may occur due to a capillarity force and surface tension of the nicotine liquid preparation. However, when the pore size of the liquid passing through hole 114 is greater than 80 micrometers, a problem such as leakage of the nicotine liquid preparation may easily occur since the effect of the force of gravity is greater than the effect of the capillarity force, which may have negative impact on a product.

The pore size of the liquid passing through hole 114 is to be adjusted based on a viscosity of the nicotine liquid preparation. Different flavored nicotine liquid preparations have different viscosities. For a nicotine liquid preparation having a relatively low viscosity, the liquid passing through hole 114 having a relatively small pore size is to be selected for use. For a nicotine liquid preparation having a relatively high viscosity, the liquid passing through hole 114 having a relatively large pore size is to be selected for use.

Optionally, the pore size of the bypass hole 115 is in a range of 10-150 micrometers. When the pore size of the bypass hole 115 is less than 10 micrometers, the problem of inadequate liquid supply may occur due to the capillarity force and surface tension of the nicotine liquid preparation. However, when the pore size of the bypass hole 115 is greater than 150 micrometers, structural strength of the liquid guide substrate is affected.

Certainly, in some implementations not shown, a hole spacing between two adjacent liquid passing through holes 114 in the porous layer 113 is in a range of 20-300 micrometers. Optionally, the hole spacing between two adjacent liquid passing through holes 114 is in a range of 20-150 micrometers. For example, optionally, a hole spacing between adjacent pass-through holes is 20 micrometers, 30 micrometers, 40 micrometers, 50 micrometers, 60 micrometers, 70 micrometers, 90 micrometers, 110 micrometers, 120 micrometers, 130 micrometers, 140 micrometers, or 150 micrometers. When the hole spacing is less than 20 micrometers, a spacing between the liquid passing through holes 114 on the atomization surface is excessively small, causing the heating film to be excessively wide at this position, and a risk of burnout may occur during the atomization. However, when the spacing between the liquid passing through holes is excessively large, an excessively small effective porosity may be caused, resulting in poor liquid replenishment during the atomization.

Certainly, in some implementations not shown, a hole spacing between two adjacent bypass holes 115 in the porous layer 113 is in a range of 20-300 micrometers.

Certainly, in some implementations not shown, a hole spacing between two adjacent bypass holes 115 is in a range of 20-150 micrometers. For example, optionally, a hole spacing between adjacent bypass holes 115 is 20 micrometers, 30 micrometers, 40 micrometers, 50 micrometers, 60 micrometers, 70 micrometers, 90 micrometers, 110 micrometers, 120 micrometers, 130 micrometers, 140 micrometers, or 150 micrometers. The hole spacing between the bypass holes 115 and the hole spacing between the liquid passing through holes 114 are defined jointly by a weaving process of an organic template and a stacking spacing of a single-layer organic template.

Certainly, in some implementations not shown, a porosity of the liquid guide substrate is in a range of 10-90%. Optionally, a porosity of the liquid guide substrate is in a range of 20-80%. For example, optionally, the porosity of the liquid guide substrate is 20%, 30%, 35%, 40%, 45%, 50%, 60%, 70%, or 80%. When the porosity is less than 20%, the liquid guide substrate cannot satisfy a requirement of liquid supply during the atomization. Consequently, a phenomenon of dry heating easily occurs, causing failure of the heating film and a poor taste. However, when the porosity is greater than 80%, strength of the liquid guide substrate drops sharply, and assembly requirements cannot be satisfied.

The liquid guide substrate is made of a ceramic material. Optionally, a main raw material for preparing the liquid guide substrate includes silicon oxide. Optionally, the raw material for preparation includes silicon oxide, potassium feldspar, acrylamide, N,N'-Methylenebisacrylamide, ammonium persulfate, and tetramethylethylenediamine.

A heating component 4 is formed by the liquid guide substrate and a heating element 200. The heating element 200 is embedded in the body 110 or arranged on the first surface 111 of the body 110, and the first surface 111 is an atomization surface. A material of the heating element 200 is aluminum, copper, silver, gold, or any alloy thereof. The heating element 200 may be a heating film, and has a thickness of 200 nm to 5 um.

The overall dimensions of the heating component 4 are 9 mm in length, 4 mm in width, and 2 mm in thickness. Certainly, in some implementations not shown, the dimensions of the heating component 4 may be 7-9 mm in length, 3-5 mm in width, and 1-2 mm in thickness.

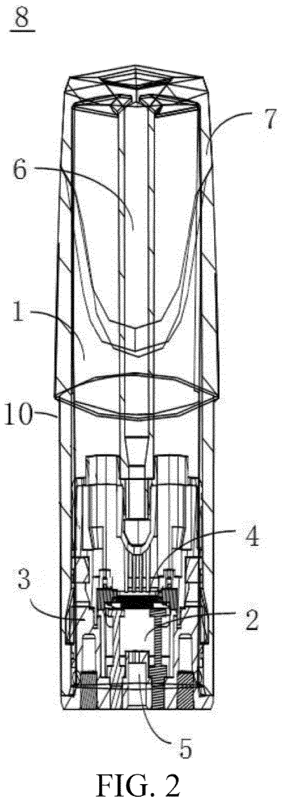

As shown in FIG. 2, an atomizer 8 includes a liquid storage portion 1 storing a liquid, an atomization cavity 2, an atomization base 3, and the foregoing heating component 4 arranged on the atomization base 3. A first surface 111 of the body 110 of the heating component is an atomization surface, and the atomization surface is in communication with the atomization cavity 2. A second surface 112 of the body 110 is a liquid absorbing surface, and the liquid absorbing surface is in communication with the liquid storage portion 1.

Optionally, the atomizer 8 includes a housing 10, a heating component 4, an atomization base 3, a liquid storage portion 1, and an air flow channel. The heating component 4 is arranged in the housing 10 together with the atomization base 3, and the heating component 4 is fixed on the atomization base 3. The liquid storage portion 1 stores a liquid aerosol generating substrate, and the heating component 4 is in fluid communication with the liquid storage portion 1. The heating component 4 is electrically connected to a main unit 9 to heat and atomize the aerosol generating substrate to generate an aerosol. The air flow channel includes an air inlet channel 5, an atomization cavity 2, and an air outlet channel 6. When a user inhales, external air enters the atomization cavity 2 through the air inlet channel 5, carries an aerosol atomized by the heating component 4, and flows to the air outlet channel 6, and the user inhales the aerosol through an end opening of the air outlet channel 6.

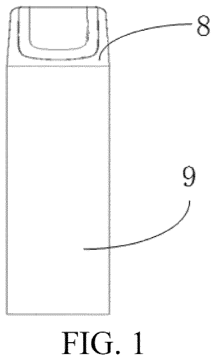

As shown in FIG. 1, an electronic atomization device includes the foregoing atomizer 8. The electronic atomization device may be configured to atomize an aerosol generating substrate. The electronic atomization device includes an atomizer 8 and a main unit 9 that are electrically connected to each other.

The atomizer 8 is configured to store the aerosol generating substrate and atomize the aerosol generating substrate to form an aerosol that can be inhaled by a user. The atomizer 8 may specifically be applied to different fields such as medical care, cosmetology, and recreational smoking.

In some specific embodiment, the atomizer 8 may be applied to an electronic aerosolization device to atomize an aerosol generating substrate and generate an aerosol for inhalation by a user.

For a specific structure and functions of the atomizer 8, reference may be made to the specific structure and functions of the atomizer 8 involved in the foregoing embodiments, and same or similar technical effects may be implemented. Details are not described herein again.

The main unit 9 includes a battery (not shown) and a controller (not shown). The battery is configured to provide electric energy for operation of the atomizer 8, so that the atomizer 8 can atomize the aerosol generating substrate to form an aerosol. The controller is configured to control the operation of the atomizer 8. The main unit 9 further includes other elements such as a battery rack and an airflow sensor.

The atomizer 8 and the main unit 9 may be integrally arranged, or may be detachably connected, which may be designed based on a specific requirement.

### Embodiment 2 in the first aspect

Compared with the foregoing Embodiment 1, Embodiment 2 of the liquid guide substrate in the first aspect of this application is different in that liquid passing through holes 114 provided in a porous layer 113 are curved holes, and bypass holes 115 are curved holes.

Through the technical solution of this embodiment, during atomization on the liquid guide substrate, the bypass holes 115 are in communication with at least some of the liquid passing through holes 114 along a second direction. During generation of bubbles on the atomization surface, the bypass hole 115 may decompose, into smaller bubbles layer by layer, the bubbles that are pushed into the liquid storage portion 1 along a direction opposite to a direction of the liquid passing through hole 114, and eliminate the bubbles in a multi-layer interconnected through hole, so that no large bubbles are generated to block the liquid passing through hole 114. The curved liquid passing through hole 114 increases a length of a channel. The increased length of the channel and a curved path thereof increase bubble travel resistance of the bubbles in the channel of the liquid passing through hole 114, making it difficult for the bubbles to enter the liquid absorbing surface. During inhalation, a bubble closer to the atomization surface is sucked out, thereby helping reduce gas return. In addition, the curved liquid passing through hole 114 has more liquid storage space, and may prevent total vaporization of nicotine liquid preparations. When one liquid passing through hole 114 is blocked by cigarette soot, a situation where no liquid is in the channel does not occur in a short time. In addition, liquid stored in the bypass hole 115 may be rapidly replenished, thereby more effectively avoiding the problem of local dry heating and prolonging the service life of the heating film.

Optionally, a pore size of the liquid passing through hole 114 is 40 micrometers, and a hole spacing between adjacent liquid passing through holes 114 is 70 micrometers. A pore size of the bypass hole 115 is 40 micrometers, and a hole spacing between adjacent bypass holes 115 is 70 micrometers. A porosity of the liquid guide substrate is about 45%. The liquid guide substrate with the specification parameter can enable various fruit-flavored nicotine liquid preparations to have a better taste when used in an atomization device.

Optionally, the overall dimensions of the heating component 4 are correspondingly 9 mm in length, 3.2 mm in width, and 1.5 mm in thickness.

### Embodiment 3 in the first aspect

Compared with the foregoing Embodiment 1 and Embodiment 2, Embodiment 3 of the liquid guide substrate in the first aspect of this application is different in that liquid passing through holes 114 provided in a porous layer 113 are straight holes, and bypass holes 115 are curved holes.

During atomization on the liquid guide substrate, the curved bypass holes 115 are in communication with at least some of the liquid passing through holes 114 along a second direction. During generation of bubbles on the atomization surface, the curved bypass hole 115 may decompose, into smaller bubbles layer by layer, the bubbles that are pushed into the liquid storage portion 1 along a direction opposite to a direction of the liquid passing through hole 114, and eliminate the bubbles in a multi-layer interconnected through hole, so that no large bubbles are generated to block the liquid passing through hole 114, causing local insufficient liquid supply. The curved bypass hole 115 increases a length of a channel. The increased length of the channel and a curved path thereof increase bubble travel resistance of the bubbles in the channel, making it difficult for the bubbles to enter the liquid absorbing surface. During inhalation, a bubble closer to the atomization surface is sucked out, thereby helping reduce gas return. The curved bypass hole 115 has more liquid storage space, and may prevent total vaporization of nicotine liquid preparations. When one liquid passing through hole 114 is blocked by cigarette soot, the liquid can be quickly replenished from the bypass hole 115 with sufficient liquid storage in a short time, thereby more effectively avoiding the problem of local dry heating and prolonging the service life of the heating film.

Optionally, a pore size of the liquid passing through hole 114 is 60 micrometers, and a hole spacing between adjacent liquid passing through holes 114 is 80 micrometers. A pore size of the bypass hole 115 is 120 micrometers, and a hole spacing between adjacent bypass holes 115 is 120 micrometers. A porosity of the liquid guide substrate is about 35%. The heating component with the specification parameter can enable a nicotine liquid preparation/e-liquid product with higher viscosity to have a better taste when used in an atomization device.

Optionally, the overall dimensions of the heating component 4 are correspondingly 9 mm in length, 4 mm in width, and 2 mm in thickness.

This application further provides a method for preparing a liquid guide substrate. An embodiment of the method for preparing a liquid guide substrate according to this application includes the following steps.

Step S1: Place a plurality of template screens side by side in a mold, where each of the template screens includes a plurality of horizontal bars and a plurality of vertical bars that are interlaced.

Step S2: Pour ceramic into the mold, and then heat the mold to sinter the ceramic and burn out the template screen.

The template screen being burned out means causing the template screen to disappear. Finally, the vertical bars of the template screen form the liquid passing through holes 114, and the horizontal bars form the bypass holes 115.

Optionally, the template screen in the preparing method may be formed by weaving a braided fabric. The mold may be an integrated independent mold, and a plurality of template screens are placed side by side in the independent mold. The mold may also be a mold formed by combining frames existing on the template screen when stacked on the template screen. Optionally, curvature of a through hole of the liquid guide substrate may be adjusted based on stretching strength of warp yarns and weft yarns in the woven template screen.

### Embodiment 1 in the second aspect

This embodiment provides a method for preparing a ceramic substrate, including the following steps.
1) Weave warp yarns and weft yarns of nylon yarns into a mesh alternately through a plain weave method, where the diameter of the warp yarns of the mesh is 40 micrometers, a spacing between adjacent warp yarns is 80 micrometers, the diameter of the weft yarns is 40 micrometers, a spacing between adjacent weft yarns is 80 micrometers, the mesh is fixed through a metal outer frame (refer to FIG. 1), then a three-dimensional organic template is formed through stacking and fixation through a clamp, a number of stacked layers is 80, and the thickness after the stacking is 4 mm.
2) Mix 70g of silicon dioxide powder, 10g of sintering aid potassium feldspar, 4g of acrylamide, 1g of N,N'-Methylenebisacrylamide, and 15g of water, adjust pH to 8.5 through ammonium hydroxide with a mass concentration of 15%, and perform ball milling to obtain ceramic slurry, where a rotational speed for the ball milling is 50 rpms, and a time for the ball milling is 24h. 1g of ammonium persulfate and 0.5g of tetramethylethylenediamine are added to the foregoing ceramic slurry and filled into the foregoing three-dimensional organic template through uniform stirring, and then drying, degreasing, and sinter molding are performed. The three-dimensional organic template is ablated to form three-dimensional holes in the substrate, where an ambient humidity for the drying is 50%, a temperature for the drying is 45°C, a time for the drying is 72h, a temperature for the degreasing is 500°C, a time for the degreasing is 1800 min, a temperature for the sintering is 1150°C, and a time for the sintering is 1200 min, so as to obtain the ceramic substrate.

FIG. 4 is a micrograph of a cross section of the ceramic substrate. It may be learned from FIG. 4 that the ceramic substrate obtained in this embodiment has a longitudinal through-hole structure. FIG. 5 is a micrograph of a longitudinal section of the ceramic substrate of Embodiment 1 above. FIG. 6 is an optical micrograph of an organic template in this embodiment. It may be learned from FIG. 4, FIG. 5, and FIG. 6 that longitudinal through holes of the ceramic substrate obtained in this embodiment intersect with transverse curved through holes to form an interconnected through-hole structure.

### Embodiment 2 in the second aspect

This embodiment provides a method for preparing a ceramic substrate, including the following steps.
1) Weave warp yarns and weft yarns of polyethylene glycol terephthalate yarns into a mesh alternately through a plain weave method, where the diameter of the warp yarns of the mesh is 200 micrometers, a spacing between adjacent warp yarns is 300 micrometers, the diameter of the weft yarns is 200 micrometers, a spacing between adjacent weft yarns is 300 micrometers, the mesh is fixed through a metal outer frame, then a three-dimensional organic template is formed through stacking and fixation through a clamp, a number of stacked layers is 500, and the thickness after the stacking is 10 mm.
2) Mix 75g of silicon dioxide powder, 5g of sintering aid potassium feldspar, 2g of acrylamide, 0.5g of N,N'-Methylenebisacrylamide, and 17.5g of water, adjust pH to 8.5 through ammonium hydroxide with a mass concentration of 15%, and perform ball milling to obtain ceramic slurry, where a rotational speed for the ball milling is 50 rpms, and a time for the ball milling is 24h. 1g of ammonium persulfate and 0.5g of tetramethylethylenediamine are added to the foregoing ceramic slurry and filled into the foregoing three-dimensional organic template through uniform stirring, and then drying, degreasing, and sinter molding are performed. The three-dimensional organic template is ablated to form three-dimensional holes in the substrate, where an ambient humidity for the drying is 50%, a temperature for the drying is 45°C, a time for the drying is 72h, a temperature for the degreasing is 500°C, a time for the degreasing is 1800 min, a temperature for the sintering is 1150°C, and a time for the sintering is 1200 min, so as to obtain the ceramic substrate.

### Embodiment 3 in the second aspect

This embodiment provides a method for preparing a ceramic substrate, including the following steps.
1) Weave warp yarns and weft yarns of nylon yarns into a mesh alternately through a plain weave method, where the diameter of the warp yarns of the mesh is 10 micrometers, a spacing between adjacent warp yarns is 20 micrometers, the diameter of the weft yarns is 10 micrometers, a spacing between adjacent weft yarns is 20 micrometers, the mesh is fixed through a metal outer frame, then a three-dimensional organic template is formed through stacking and fixation through a clamp, a number of stacked layers is 50, and the thickness after the stacking is 2 mm.
2) Mix 55g of silicon dioxide powder, 5g of sintering aid potassium feldspar, 5g of acrylamide, 2g of N,N'-Methylenebisacrylamide, and 33g of water, adjust pH to 8.5 through ammonium hydroxide with a mass concentration of 15%, and perform ball milling to obtain ceramic slurry, where a rotational speed for the ball milling is 50 rpms, and a time for the ball milling is 24h. 1g of ammonium persulfate and 0.5g of tetramethylethylenediamine are added to the foregoing ceramic slurry and filled into the foregoing three-dimensional organic template through uniform stirring, and then drying, degreasing, and sinter molding are performed. The three-dimensional organic template is ablated to form three-dimensional holes in the substrate, where an ambient humidity for the drying is 50%, a temperature for the drying is 45°C, a time for the drying is 72h, a temperature for the degreasing is 500°C, a time for the degreasing is 1800 min, a temperature for the sintering is 1150°C, and a time for the sintering is 1200 min, so as to obtain the ceramic substrate.

### Embodiment 4 in the second aspect

This embodiment provides a method for manufacturing a heating component, including the following steps.

A stainless steel heating film is printed on a surface of the ceramic substrate obtained in Embodiment 1, and sintered with a sintering temperature of 1150°C and a sintering time of 1200 min, to obtain the heating component.

### Embodiment 5 in the second aspect

This embodiment provides a method for manufacturing a heating component, including the following steps.

A stainless steel heating film is printed on a surface of the ceramic substrate obtained in Embodiment 2, and sintered with a sintering temperature of 1150°C and a sintering time of 1200 min, to obtain the heating component.

### Embodiment 6 in the second aspect

This embodiment provides a method for manufacturing a heating component, including the following steps.

A stainless steel heating film is printed on a surface of the ceramic substrate obtained in Embodiment 3, and sintered with a sintering temperature of 1150°C and a sintering time of 1200 min, to obtain the heating component.

### Comparative example 1 in the second aspect

This comparative example provides a heating component, which is different from Embodiment 5 in that the ceramic structure of the heating component is an interconnected disordered pore structure, and a method for preparing a heating component includes the following steps.

75g of silicon dioxide powder, 5g of sintering aid potassium feldspar, 17.5g of paraffin, 25g of polyethylene, and 20g of starch are mixed, are injected into a mold in a manner of injection modeling after being heated and mixed uniformly, and a desired shape is formed. Then after degreasing and sintering (a degreasing temperature is 500°C, a degreasing time is 1800 min, a sintering temperature is 1150°C, a sintering time is 1200 min), ceramic is formed into a required shape. A stainless steel heating film is printed on a surface of the obtained ceramic, and sintered with a sintering temperature of 1150°C and a sintering time of 1200 min, to obtain the heating component.

### Comparative example 2 in the second aspect

This comparative example provides a heating component, which is different from Embodiment 5 in that ceramic of the heating component has only a pass-through hole structure where pass-through holes are not interconnected, and a method for preparing a heating component includes the following steps.

75g of silicon dioxide powder, 5g of sintering aid potassium feldspar, 17.5g of ethyl alcohol, and 5g of polyvinyl butyral binder are mixed uniformly and then tape-casted to form a thin ceramic green film strip. An array of non-interconnected pass-through holes is formed on a surface of the ceramic green film strip through laser drilling. After degreasing and sintering (a degreasing temperature is 500°C, a degreasing time is 1800 min, a sintering temperature is 1150°C, a sintering time is 1200 min), ceramic is formed into a required shape. A stainless steel heating film is printed on a surface of the obtained ceramic, and sintered with a sintering temperature of 1150°C and a sintering time of 1200 min, to obtain the heating component.

### Test Example in the second aspect

In this application, a failure time of a heating film is measured in Embodiments 4-6 and comparison examples 1-2 through a machine inhalation method. The measurement method is as follows. A standard smoking machine is used for an inhalation test, an inhalation condition is 3s puff followed by 27s pauses, an inhalation volume of 55 mL, and a nicotine liquid preparation being national standard tobacco (a nicotine content of 18 mg/mL), and a number of puffs when the heating film fails is recorded. A standard for the failure of the heating film is that the resistance of the heating film increases by 20% compared with that before inhalation. Sensory evaluation tests were conducted by trained panelists on the electronic atomization device formed by the heating component obtained in Embodiments 4-6 and comparative examples 1-2 to evaluate the taste.

### Taste testing steps include:

Testing environmental conditions: a temperature of 23.4°C, and a humidity of 66% RH.

Testing method: Intensity levels of indicators (sweetness, cooling sensation, and aroma intensity) of samples are determined through a 100% scale.

Evaluation and measurement method: 1. The samples undergo sensory evaluation through the following protocol: 3-second puffs followed by 8-second pauses, with a total smoke volume of 35 mL. The first five puffs are excluded from assessment. 2. During the test, a time interval between two puffs is 30s, to fully determine feeling when smoke passes through a mouth, a throat, lungs, and a nasal cavity. 3. The first puff sensation after testing initiation is used as the baseline, and the second puff and the third puff are continued. If the taste remains consistent, a comprehensive evaluation score and conclusion may be given (a scale of marks 0-10, where 0 represents the poorest overall evaluation and 10 represents the best overall evaluation). If the taste difference is relatively large, tasting and testing rounds are to be added, and then a comprehensive scoring opinion and conclusion are provided.

Number of persons tested: 6 persons for 1 round; data analysis: t test. Test results are shown in Table 1.

**Table 1**

| Sample | Failure time of the heating film/the number of puffs | Results of taste test (full score 10) |
|---|---|---|
| Embodiment 4 | 800 puffs | 8.5 points |
| Embodiment 5 | > 3000 puffs | 7.5 points |
| Embodiment 6 | 500 puffs | 7 |
| Comparative example 1 | / | 5 points |
| Comparative example 2 | 300 puffs | 6 points |

Obviously, the above embodiments are merely examples for clear description and not limitations on the implementations. A person of ordinary skill in the art may still make other changes or modifications in other different forms based on the foregoing description. It is unnecessary and impossible to exhaust all implementations herein. The obvious changes or modifications derived therefrom are still within the protection scope of this application.

## Claims

1. A liquid guide substrate, comprising:
a body (110), wherein the body (110) has a first surface (111) and a second surface (112) arranged opposite to each other; and
a porous layer (113), arranged inside the body (110), wherein the porous layer (113) comprises a plurality of liquid passing through holes (114) and a plurality of bypass holes (115), the liquid passing through holes (114) extend through the first surface (111) and the second surface (112) along a first direction, the bypass holes (115) are in communication with at least some of the liquid passing through holes (114) along a second direction, and the liquid passing through holes (114) and/or the bypass holes (115) are curved holes.

2. The liquid guide substrate of claim 1, wherein each of the bypass holes (115) is a curved hole, and the bypass hole (115) is bent at an intersection with each of the liquid passing through holes (114), so as to bypass the liquid passing through hole (114).

3. The liquid guide substrate of claim 1, wherein each of the bypass holes (115) is in communication with each liquid passing through hole (114) among the plurality of liquid passing through holes (114).

4. The liquid guide substrate of claim 1, wherein each of the liquid passing through holes (114) is a curved hole, and the liquid passing through hole (114) is bent at an intersection with each of the bypass holes (115), so as to bypass the bypass hole (115).

5. The liquid guide substrate of claim 1, wherein each of the bypass holes (115) is provided perpendicular to each of the liquid passing through holes (114).

6. The liquid guide substrate of claim 1, wherein the first direction is arranged perpendicular to the second direction.

7. The liquid guide substrate of any one of claims 1 to 6, wherein a plurality of porous layers (113) are provided, the plurality of porous layers (113) are provided at intervals along a third direction, and the third direction is arranged at an angle to a plane formed by the first direction and the second direction.

8. The liquid guide substrate of claim 7, wherein the third direction is perpendicular to the plane formed by the first direction and the second direction.

9. The liquid guide substrate of any one of claims 1 to 6, wherein the first surface (111) is an atomization surface, and the second surface (112) is a liquid absorbing surface.

10. The liquid guide substrate of any one of claims 1 to 6, wherein an interval between two adjacent porous layers (113) is in a range of 20-400 micrometers.

11. The liquid guide substrate of any one of claims 1 to 6, wherein an interval between two adjacent porous layers (113) is in a range of 40-100 micrometers.

12. The liquid guide substrate of any one of claims 1 to 6, wherein pore sizes of the liquid passing through holes (114) and the bypass holes (115) are the same or different, and the pore sizes are in a range of 10-200 micrometers.

13. The liquid guide substrate of any one of claims 1 to 6, wherein a pore size of each of the liquid passing through holes (114) is in a range of 10-80 micrometers.

14. The liquid guide substrate of any one of claims 1 to 6, wherein a pore size of each of the bypass holes (115) is in a range of 10-150 micrometers.

15. The liquid guide substrate of any one of claims 1 to 6, wherein a hole spacing between two adjacent liquid passing through holes (114) in the porous layer (113) is in a range of 20-300 micrometers.

16. The liquid guide substrate of any one of claims 1 to 6, wherein a hole spacing between two adjacent liquid passing through holes (114) in the porous layer (113) is in a range of 20-150 micrometers.

17. The liquid guide substrate of any one of claims 1 to 6, wherein a hole spacing between two adjacent bypass holes (115) in the porous layer (113) is in a range of 20-300 micrometers.

18. The liquid guide substrate of any one of claims 1 to 6, wherein a hole spacing between two adjacent bypass holes (115) in the porous layer (113) is in a range of 20-150 micrometers.

19. The liquid guide substrate of any one of claims 1 to 6, wherein a porosity of the liquid guide substrate is in a range of 10-90%.

20. The liquid guide substrate of any one of claims 1 to 6, wherein a porosity of the liquid guide substrate is in a range of 20-80%.

21. The liquid guide substrate of any one of claims 1 to 6, wherein the body (110) is made of a ceramic material.

22. A heating component, wherein the heating component (4) comprises the liquid guide substrate of any one of claims 1 to 21 and a heating element (200), the heating element (200) is embedded in the body (110) or arranged on a first surface (111) of the body (110), and the first surface (111) is an atomization surface.

23. The heating component of claim 22, wherein the dimensions of the heating component (4) are 7-9 mm in length, 3-5 mm in width, and 1-2 mm in thickness.

24. An atomizer, comprising:
a liquid storage portion (1), storing a liquid; and
the heating component (4) of claim 22 or 23, wherein the first surface (111) of the body (110) is an atomization surface, the second surface (112) of the body (110) is a liquid absorbing surface, and the liquid absorbing surface is in communication with the liquid storage portion (1).

25. An electronic atomization device, comprising the atomizer (8) of claim 24.

26. A method for preparing a ceramic substrate, wherein the method comprises the following steps:
1) stacking ablative organic-material meshes to form a three-dimensional organic template; and
2) filling the three-dimensional organic template with ceramic slurry, and performing drying, degreasing, and sinter molding to obtain the ceramic substrate.

27. The preparing method of claim 26, wherein a three-dimensional hole is formed in the ceramic substrate after the three-dimensional organic template is ablated.

28. The preparing method of claim 26, wherein a material of the organic-material mesh is an organic polymer material; and the organic polymer material comprises one of a polyamide material and a polyester material.

29. The preparing method of any one of claims 26 to 28, wherein the material of the organic-material mesh is selected from at least one of nylon and polyethylene terephthalate.

30. The preparing method of any one of claims 26 to 28, wherein the organic-material mesh in step 1) is formed by alternately weaving warp yarns and weft yarns of organic-material silk yarns.

31. The preparing method of claim 30, wherein the diameters of the warp yarns and the weft yarns are the same or different, and the diameters are in a range of 10-200 micrometers.

32. The preparing method of claim 30, wherein a spacing between adjacent warp yarns is in a range of 20-300 micrometers, and a spacing between adjacent weft yarns is in a range of 20-300 micrometers.

33. The preparing method of claim 26, wherein the organic-material mesh further comprises a step of performing fixation through an outer frame.

34. The preparing method of claim 26, wherein a quantity of layers of the stacked organic-material meshes in step 1) in a range of 50-500, and a thickness of the stacked meshes is in a range of 2-10 mm.

35. The preparing method of claim 26, wherein after the stacking the organic-material meshes in step 1), the method further comprises a step of fixing the stacked meshes through a clamp.

36. The preparing method of claim 26, wherein preparation of the ceramic slurry in step (2) comprises the following steps: mixing ceramic powder, an organic monomer, a cross-linking agent, and water, adjusting pH, and performing trituration to obtain the ceramic slurry.

37. The preparing method of claim 36, wherein a mass ratio of the ceramic powder, the organic monomer, the cross-linking agent, and the water is (60-80):(2-5):(0.2-2):(15-40); and/or
the organic monomer is acrylamide, and the cross-linking agent is N,N'-Methylenebisacrylamide.

38. The preparing method of claim 36, wherein the method for preparing the ceramic slurry further comprises a step of adding an initiator and a catalyst to the ceramic slurry.

39. The preparing method of claim 38, wherein a mass ratio of the organic monomer, the initiator, and the catalyst is (1-10):(0.1-1):(0.1-1);
the initiator is ammonium persulfate; and
the catalyst is tetramethylethylenediamine.

40. The preparing method of claim 36, wherein the ceramic powder comprises silicon dioxide and a sintering aid; and
a mass ratio of the silicon oxide to the sintering aid is (55-95):(5-30).

41. The preparing method of claim 40, wherein the sintering aid is potassium feldspar.

42. The preparing method of claim 36, wherein a rotational speed for the trituration is in a range of 50-100 rpm, and a time for the trituration is in a range of 24-36h; and/or
a value for adjusting the pH during preparation of the ceramic slurry is in a range of 8-10; and/or
a regulator for adjusting the pH is ammonium hydroxide or tetramethylammonium hydroxide.

43. The preparing method of claim 26, wherein in step (2), a temperature for the drying is in a range of 25-60°C, and a time for the drying is in a range of 24-120h; and/or
in step (2), a temperature for the degreasing is in a range of 450-500°C, and a time for the degreasing is in a range of 1800-2400 min; and/or
in step (2), a temperature for the sintering is in a range of 1150-1200°C, and a time for the sintering is in a range of 1200-1800 min.

44. A ceramic substrate, prepared through the method of any one of claims 26 to 43.

45. A heating component, comprising the ceramic substrate according to claim 44 and a heating film arranged on a surface of the ceramic substrate.

46. A method for manufacturing the heating component of claim 45, comprising the following steps:
printing and sintering a heating film on a surface of the ceramic substrate of claim 44, to obtain the heating component.

47. The preparing method of claim 46, wherein a temperature for the sintering is in a range of 1150-1200°C, and a time for the sintering is in a range of 1200-1800 min.

48. An atomization device, comprising the ceramic substrate of claim 44 and/or the heating component of claim 45.

49. The atomization device of claim 48, wherein the atomization device is an electronic atomization device.
